# EUROPEAN PATENT SPECIFICATION

(11) **EP 4 523 796 B1**
(45) Date of publication and mention of the grant of the patent: **02.12.2026**
(21) Application number: 22942408.0
(22) Date of filing: 12.10.2022
(51) Int. Cl.: B05B 9/04, F04B 17/03

(54) **DURABLE HIGH-PRESSURE AIRLESS SPRAYING MACHINE**
DAUERHAFTE DRUCKLUFTLOSE SPRÜHMASCHINE
MACHINE DE PULVÉRISATION SANS AIR À HAUTE PRESSION DURABLE

(30) Priority: 20.05.2022 CN 202210554239
(43) Date of publication of application: 19.03.2025
(73) Proprietor: Zhejiang Prulde Electric Appliance Co., Ltd., Jinhua, Zhejiang 321035 (CN)
(72) Inventor: YANG, Weiming, Jinhua, Zhejiang 321035 (CN)
(74) Representative: Santarelli
(86) International application number: PCT/CN2022/124861
(87) International publication number: WO 2023/221381

(56) References cited:
- CN-A- 114 887 791
- CN-U- 210 058 676
- CN-U- 210 058 676
- CN-U- 213 789 382
- CN-U- 213 981 883
- US-A1- 2020 001 312

## Description

### BACKGROUND OF THE INVENTION

### 1. Technical Field

The present invention belongs to the technical field of spraying machines and, in particular, to a durable high-pressure airless spraying machine.

### 2. Description of Related Art

An airless spraying machine is a spraying machine which pressurizes a paint using a plunger pump and guides the pressurized paint to a spray gun via a high-pressure hose, and then releases the pressure through a nozzle to atomize the paint, thus forming a dense coating on the surface of a wall. See for example CN210058676. The plunger pump generally pressurizes the paint by virtue of a reciprocating piston structure. The plunger pump in the prior art is as described in the utility model with patent number CN201920555917.6 which discloses an airless spraying machine. In the utility model, a plunger pump and a controller which controls the plunger pump to work are arranged under a storage container. If the storage container leaks, the liquid paint falling on the plunger pump and controller will damage the plunger pump and controller, and even make the controller short circuit, thereby causing safety risks and reducing the service life of the high-pressure airless spraying machine.

Another example is the invention of the patent CN201510188235.2, which discloses a plunger pump for high-pressure airless spraying machines. In the invention, a swash plate pushes against a balancing column and a piston to realize reciprocating movement of the piston. The swash plate is inclined, and the piston needs to overcome the friction force between the swash plate and the balancing column every time the piston does the reciprocating movement, which will accelerate wear of the swash plate and the balancing column and also increase the driving resistance of the swash plate and reduce the efficiency of the plunger pump, thus reducing the service life of the high-pressure airless spraying machines.

### BRIEF SUMMARY OF THE INVENTION

In view of the problem that the service life of the high-pressure airless spraying machines in the prior art can be extended, the present invention provides a durable high-pressure airless spraying machine.

The objective of the present invention is achieved by a device according claim 1.

In the described solution, the plunger pump and the control circuit board are located on one side of the liquid storage container, and even if liquid leaks due to the failure in the bottom seal of the liquid storage container, the operation of the plunger pump and the control circuit board will not be affected, thereby ensuring the use safety of the plunger pump. Moreover, in the present invention, two sides of the transfer box are symmetrically arranged with balls to limit the linear reciprocating movement of the transfer box. When the transfer box is in contact with the balls during reciprocating movement, the balls will contact with each other due to the linear passage of the transfer box, and then the balls are driven to rotate, thus greatly reducing the friction between the transfer box and the balls, improving the driving efficiency of the plunger pump, reducing the wear between the parts, increasing the service time of the balls and the parts of the transfer box. As a result, the spraying machine of the invention is more durable. And through the rolling guiding effect of the balls, it is not necessary to locate the transfer box between the balls on two sides, even if the transfer box has a little offset, it can also be easily guided by the balls without increasing the friction force during the linear reciprocating movement of the transfer box, thereby increasing the tolerance of the assembly and achieving convenient installment.

Preferably, the bottom of the liquid storage container is provided with a liquid outlet, and the liquid inlet chamber and the liquid outlet are connected by a connecting chamber.

Preferably, the liquid outlet is provided with a filter screen, a reducing chamber with a smaller diameter than the liquid inlet chamber is arranged between the liquid inlet chamber and the plunger chamber, the reducing chamber is provided with a liquid inlet ball valve, and a circular stopper ring with an inner diameter smaller than the diameter of the liquid inlet ball valve is arranged around an end of the reducing chamber facing the liquid inlet chamber; the filter screen is provided with an ejector rod, one end of the ejector rod extends into the reducing chamber and reaches a front end of the liquid inlet ball valve, and the end of the ejector rod can further extend into the reducing chamber to open the liquid inlet ball valve. If the spraying machine is not used for a long time, it will cause the liquid inlet ball valve to stick in the reducing chamber and block the reducing chamber. By pressing the ejector rod with an external force, the ejector rod can push the liquid inlet ball valve open.

Preferably, the liquid outlet is provided with a filter screen, a reducing chamber with a smaller diameter than the liquid inlet chamber is arranged between the liquid inlet chamber and the plunger chamber, the reducing chamber is internally provided with a liquid inlet ball valve, and a circular stopper ring with an inner diameter smaller than the diameter of the liquid inlet ball valve is arranged around an end of the reducing chamber facing the liquid inlet chamber; the filter screen is provided with an ejector rod, one end of the ejector rod extends into the stopper ring and pushes against the liquid inlet ball valve, and the end of the ejector rod can further extend into the reducing chamber to push the liquid inlet ball valve open. Since one end of the ejector rod pushes against the liquid inlet ball valve, the ejector rod can be operated manually to push the liquid inlet ball valve open when the reducing chamber is blocked by the liquid inlet ball valve on the one hand. On the other hand, when the liquid inlet ball valve moves back and forth in the reducing chamber together with the reciprocating movement of the piston of the plunger pump; each time the liquid inlet ball valve returns to the end of the ejector rod, the liquid inlet ball valve hits the ejector rod, thus causing vibration of the filter screen. During the operation of the spraying machine, the continuous vibration of the filter screen can shake off large paint particles that cannot pass the filter screen and adhere to the filter screen, thereby preventing a decline in the ability of the plunger pump to pump the paint due to the blockage of the filter screen after long-term operation. And since the filter screen is located at the bottom of the liquid storage container, the vibration of the filter screen will also cause the vibration of the paint in the liquid storage container, thereby slowing down the condensation time of the paint. The paint particles are always in a small size and will not easily block a spray gun connected with the liquid outlet chamber of the plunger pump during use. In this way, the entire spraying machine is more durable.

Preferably, the liquid outlet is surrounded by an internally concave step, the filter screen is in tight fit with the step, and the step is symmetrically provided with two grooves with a depth greater than the depth of the step. Due to arrangement of the grooves, the contact surface between the step and a periphery of the filter screen is reduced, and the filter screen above the grooves is more easily deformed by force, so the ejector rod is more easily pressed.

Preferably, the plunger chamber is internally provided with a push column, one end of the push column slightly extends into the reducing chamber, and a first pressure spring is arranged between the push column and the liquid inlet ball valve. Due to arrangement of the first pressure spring, the liquid inlet ball valve pushes against the stopper ring without an external force and blocks a passage between the stopper ring and the reducing chamber. When the plunger pump works, under the action of the pumping force of the plunger pump, the liquid inlet ball valve moves toward the plunger chamber and leaves the stopper ring, and then the passage between the stopper ring and the reducing chamber is unblocked, so that the paint enters the plunger chamber and further flows to the liquid outlet chamber of the plunger pump to be sprayed out.

Preferably, the ejector rod comprises a first section perpendicular to the filter screen and a second section parallel to the liquid inlet chamber, the first section and the second section are fixedly connected, and an inclined surface is provided at a joint between the first section and the second section; the connecting chamber is internally provided with a ramp which is located at the lower end of the inclined surface of the ejector rod, and the gradient of the ramp is the same as that of the inclined surface. The ramp limits the inclined surface to sliding along the ramp only, so that the first section also move horizontally toward the second section while moving down, and then the second section moves horizontally, thereby pushing the liquid inlet ball valve to move.

Preferably, the first section extends up from the lower end of the filter screen to the upper end of the filter screen. Since the first section extends up to the upper end of the filter screen, the ejector rod can be easily pressed manually if necessary, there is no need to press the filter screen to put pressure on the ejector rod, and the center deformation of the filter screen is the largest, thereby saving energy.

Preferably, the filter screen is slightly arched upward from the sides to the center. After the center of the filter screen is driven by the first section of the ejector rod to move down, this structure of the filter screen is more conducive to the rebound of the filter screen.

Preferably, the pressure protection device comprises a pressure detecting chamber internally connected with the plunger chamber, the pressure detecting chamber is internally provided with a pressure detecting rod that moves up and down in the pressure detecting chamber with the pressure change in the plunger chamber, a microswitch is arranged outside the pressure detecting chamber, and the pressure detecting rod is provided with a toggle rod that drives the microswitch to act. When the working pressure of the plunger pump reaches a set value, a motor that drives the plunger pump to work will stop running, and when the working pressure of the plunger pump is less than the set value, the motor starts to run and pressurize. In this way, the spraying machine is always in a safe state. And since the microswitch is arranged outside the pressure detecting chamber, even if wear leakage occurs in the pressure detecting chamber, it will not affect the microswitch. In this way, the durability of the pressure protection device is improved.

Preferably, an adjusting screw is arranged at an end of the pressure detecting chamber away from the plunger chamber, an end of the adjusting screw extends deeply into the pressure detecting chamber, and a second pressure spring is arranged between the adjusting screw and the pressure detecting rod. The adjusting screw can be screwed in and out of the pressure detecting chamber to adjust the pressure value of the second pressure spring between the pressure detecting chamber and the pressure detecting rod, thereby adjusting the pressure of the pressure detecting rod against the plunger pump. Then, the pressure change in the plunger pump is detected by the displacement of the pressure detecting rod.

Preferably, the eccentric rotating structure comprises a circular gear disc, one side of the gear disc is provided with a driving column, the center of the driving column is eccentric to the center of the gear disc, the driving column is internally provided with a bearing, a mounting column is arranged at the center of the bearing, the mounting column passes through the center of the gear disc, two ends of the mounting column are respectively mounted on a pump body of the plunger pump, an end of the driving lever away from the piston rod is provided with a circular through hole, the diameter of the through hole is greater than that of the driving column, and the driving lever is sleeved on the driving column through the through hole. The driving column is driven to rotate when the gear disc rotates. The diameter of the driving column is less than the diameter of the through hole through which the driving lever is sleeved on the driving column. When the driving column does an eccentric circular movement, the driving lever is driven to do a reciprocating movement.

Compared with the prior art, the present invention has the following beneficial effects:

In the present invention, the plunger pump and the control circuit board are located on one side of the liquid storage container, and even if liquid leaks due to the failure in the bottom seal of the liquid storage container, the operation of the plunger pump and the control circuit board will not be affected, thereby ensuring the use safety of the plunger pump.

Due to the arrangement of the ejector rod, the ejector rod is pressed with an external force to push the liquid inlet valve open when the liquid inlet ball valve blocks the reducing chamber.

The balls arranged on the two sides of the transfer box limit the transfer box to doing a linear reciprocating movement only between the balls on the two sides. When the transfer box is in contact with the balls during reciprocating movement, the balls will contact with each other due to the linear passage of the transfer box, and then the balls are driven to rotate, thus greatly reducing the friction between the transfer box and the balls, improving the driving efficiency of the plunger pump, increasing the service time of the balls and the parts of the transfer box. In this way, the spraying machine of the present invention is more durable.

### BRIEF DESCRIPTION OF THE SEVERAL VIEWS OF THE DRAWINGS

FIG. 1 is a schematic structural diagram of the present invention;
FIG. 2 is a partial section view of the present invention;
FIG. 3 is a schematic structural diagram of an ejector rod acting on a liquid inlet ball valve;
FIG. 4 is a schematic structural diagram of a plunger pump;
FIG. 5 is an exploded diagram of the plunger pump;

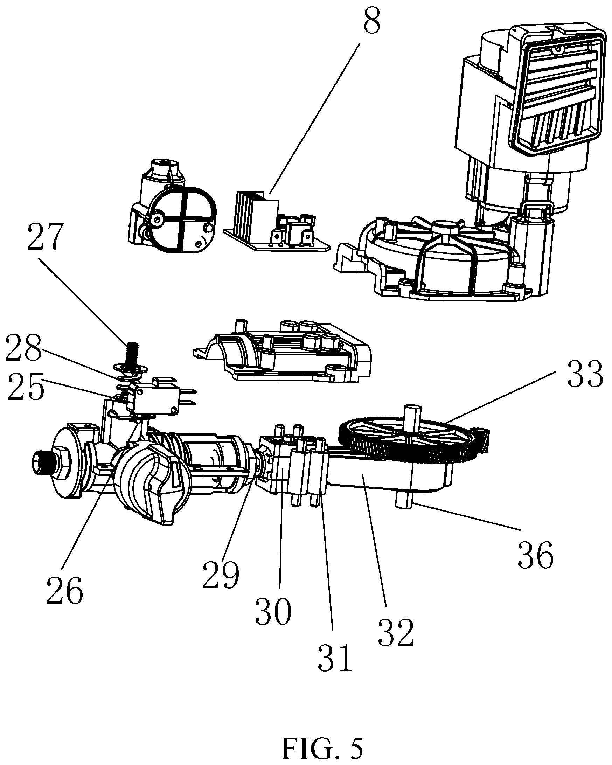

FIG. 5 is an exploded diagram of a pressure protection device;

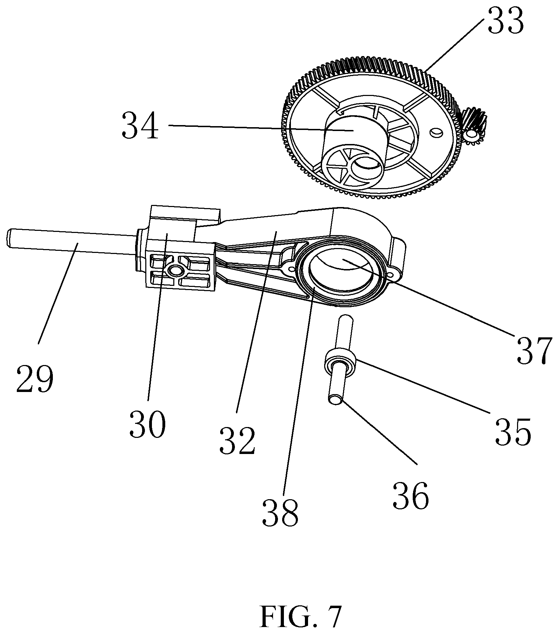

FIG. 7 is a schematic structural diagram of an eccentric rotating structure.

Reference numerals: 1. Housing; 2. liquid storage container; 3. plunger pump; 4. plunger chamber; 5. liquid inlet chamber; 6. liquid outlet chamber; 7. pressure relief valve; 8. control circuit board; 9. liquid outlet; 10. steps; 11. groove; 12. filter screen; 13. first section; 14. second section; 15. reducing chamber; 16. stopper ring; 17. liquid inlet ball valve; 18. push column; 19. first pressure spring; 20. connecting chamber; 21. inclined surface; 22. ramp; 23. pressure detecting chamber; 24. pressure detecting rod; 25. microswitch; 26. toggle rod; 27. adjusting screw; 28. second pressure spring; 29. piston rod; 30. transfer box; 31. ball; 32. driving level; 33. gear disc; 34. driving column; 35. bearing; 36. mounting column; 37. through hole; 38. needle bearing.

### DETAILED DESCRIPTION OF THE INVENTION

The invention is further described below in conjunction with embodiments illustrated by the accompanying drawings.

### Embodiment 1

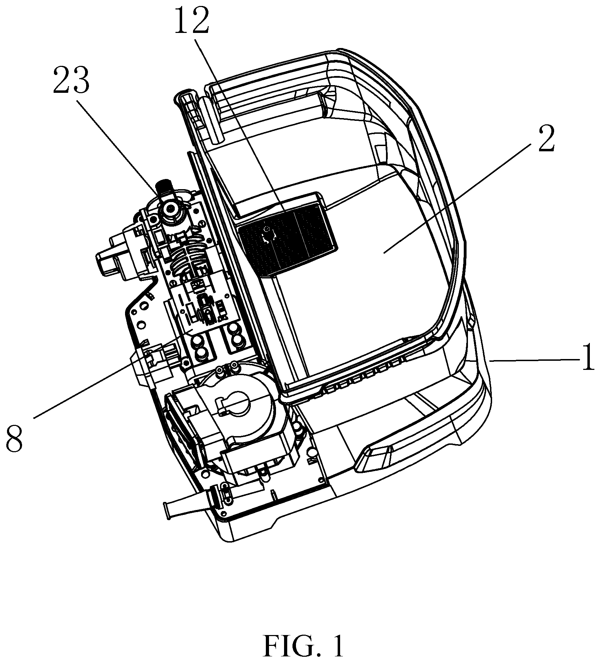

As shown in FIG. 1, a spraying machine comprises a housing 1, a liquid storage container 2 and a plunger pump 3, wherein the plunger pump 3 comprises a plunger chamber 4, a liquid inlet chamber 5, a liquid outlet chamber 6 and a pressure relief valve 7, the bottom of the liquid storage container 2 is connected with the liquid inlet chamber 5, the plunger chamber 4 is provided with a pressure protection device, the plunger pump 3 is arranged on one side of the liquid storage container 2 and lower than a lower end face of the liquid storage container 2, and the plunger pump 3 is provided with a control circuit board 8 that controls the operation of the plunger pump 3. The plunger pump 3 and the control circuit board 8 are located on one side of the liquid storage container 2, and even if liquid leaks due to the failure in the bottom seal of the liquid storage container 2, the operation of the plunger pump 3 and the control circuit board 8 will not be affected, thereby ensuring the use safety of the plunger pump.

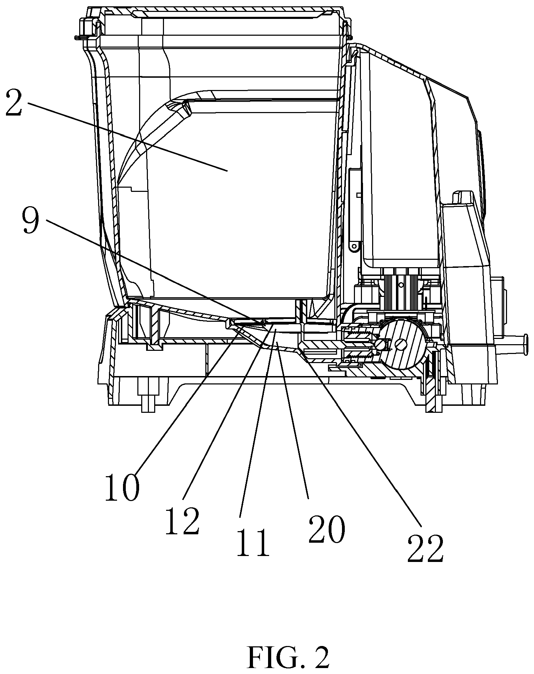

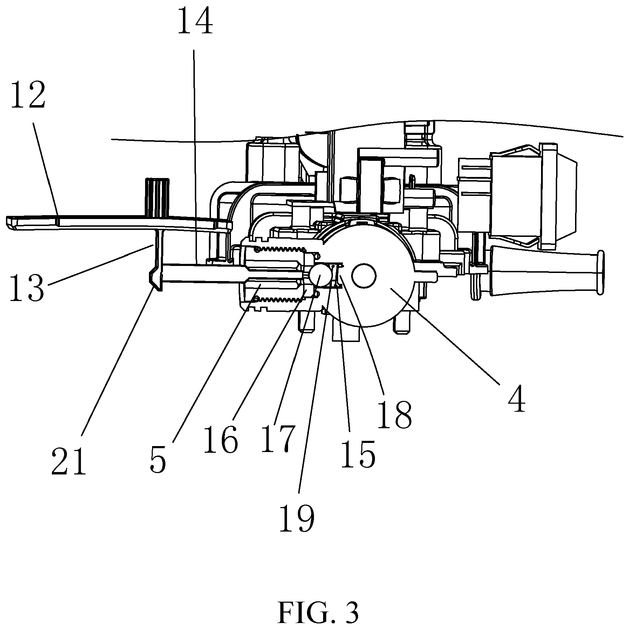

As shown in FIGS. 2 and 3, the bottom of the liquid storage container 2 is provided with a liquid outlet 9, and the liquid inlet chamber 5 and the liquid outlet 9 are connected by a connecting chamber 20. The liquid outlet 9 is surrounded by an internally concave step 10, a filter screen 12 is in tight fit with the step 10, and the filter screen 12 is slightly arched upward from the sides to the center. The step 10 is symmetrically provided with two grooves 11 with a depth greater than the depth of the step 10. The liquid outlet 9 is provided with the filter screen 12, a reducing chamber 15 with a smaller diameter than the liquid inlet chamber 5 is arranged between the liquid inlet chamber 5 and the plunger chamber 4, the reducing chamber 15 is internally provided with a liquid inlet ball valve 17, and a circular stopper ring 16 with an inner diameter smaller than the diameter of the liquid inlet ball valve 17 is arranged around an end of the reducing chamber 15 facing the liquid inlet chamber 5; the plunger chamber 4 is internally provided with a push column 18, one end of the push column 18 slightly extends into the reducing chamber 15, and a first pressure spring 19 is arranged between the push column 18 and the liquid inlet ball valve 17. The filter screen 12 is provided with an ejector rod, one end of the ejector rod extends into the reducing chamber 15 and reaches a front end of the liquid inlet ball valve 17, and the end of the ejector rod can further extend into the reducing chamber 15 to push the liquid inlet ball valve open. If the spraying machine is not used for a long time, it will cause the liquid inlet ball valve 17 to stick in the reducing chamber 15 and block the reducing chamber 5. By pressing the ejector rod with an external force, the ejector rod can push the liquid inlet ball valve 17 open.

The ejector rod comprises a first section 13 perpendicular to the filter screen 12 and a second section 14 parallel to the liquid inlet chamber 5. The first section 13 extends up from the lower end of the filter screen to the upper end of the filter screen 12. The first section 13 is arranged at the center of the filter screen 12 The first section 13 and the second section 14 are fixedly connected, and an inclined surface 21 is provided at a joint between the first section 13 and the second section 14; the connecting chamber 20 is internally provided with a ramp 22 which is located at the lower end of the inclined surface 21 of the ejector rod, and the gradient of the ramp 22 is the same as that of the inclined surface 21. The ramp 22 limits the inclined surface 21 to sliding along the ramp 22 only, so that the first section 13 also move horizontally toward the second section 14 while moving down, and then the second section 14 moves horizontally, thereby pushing the liquid inlet ball valve 17 to move.

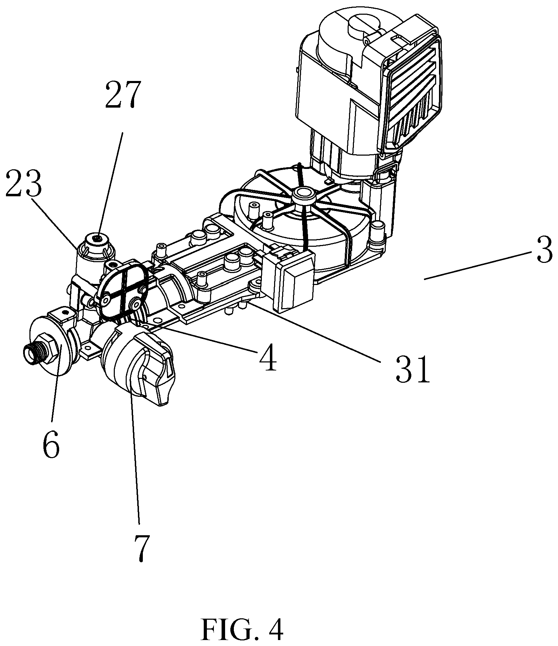

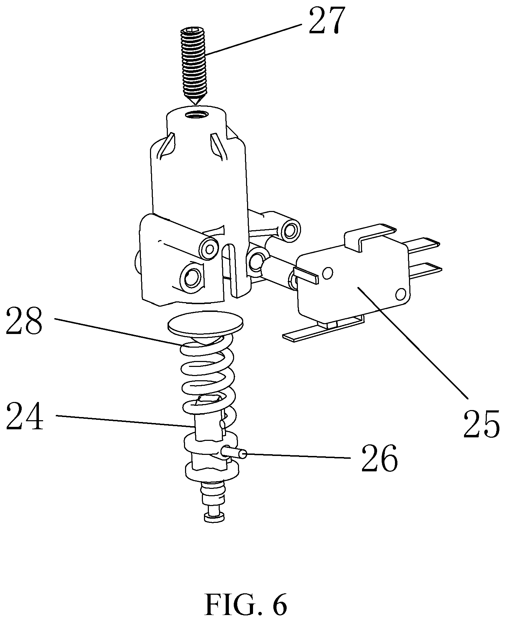

As shown in FIGS. 4 and 6, the pressure protection device comprises a pressure detecting chamber 23 internally connected with the plunger chamber 4, the pressure detecting chamber 23 is internally provided with a pressure detecting rod 24 that moves up and down in the pressure detecting chamber 23 with the pressure change in the plunger chamber 4, an adjusting screw 27 is arranged at an end of the pressure detecting chamber 23 away from the plunger chamber 4, an end of the adjusting screw 27 extends deeply into the pressure detecting chamber 23, and a second pressure spring 28 is arranged between the adjusting screw 27 and the pressure detecting rod 24. The adjusting screw 27 can be screwed in and out of the pressure detecting chamber 23 to adjust the pressure value of the second pressure spring 28 between the pressure detecting chamber 23 and the pressure detecting rod 24, thereby adjusting the pressure of the pressure detecting rod 24 against the plunger pump 3. Then, the pressure change in the plunger pump 3 is detected by the displacement of the pressure detecting rod 24.

A microswitch 25 is arranged outside the pressure detecting chamber 23, and the pressure detecting rod 24 is provided with a toggle rod 26 that drives the microswitch 25 to act. When the working pressure of the plunger pump 3 reaches a set value, the pressure detecting rod 24 is pushed up by the pressure in the plunger pump and then the toggle rod 26 on the pressure detecting rod 24 moves toward the microswitch 25. The microswitch 25 acts to stop the running of a motor that drives the plunger pump 3 to work. When the working pressure of the plunger pump 3 is less than the set value, the motor starts to run and pressurize. In this way, the spraying machine is always in a safe state. And since the microswitch 25 is arranged outside the pressure detecting chamber 23, even if wear leakage occurs in the pressure detecting chamber 23, it will not affect the microswitch 25. In this way, the durability of the pressure protection device is improved.

As shown in FIG. 7, the plunger chamber 4 is internally provided with a piston, a piston rod 29 is fixedly provided at one end of the piston, the piston rod 29 is driven by a driving mechanism to do a reciprocating movement, the driving mechanism comprises a transfer box 30 fixedly connected to one end of the piston rod 29, the transfer box 30 is rotatably connected to a driving lever 32, the other end of the driving lever 32 is rotatably connected to an eccentric rotating structure, and two pairs of balls 31 are provided on two sides of the transfer box 30. The balls 31 arranged symmetrically on the two sides of the transfer box 30 limit the transfer box 30 to doing a linear reciprocating movement only between the balls 31 on the two sides. When the transfer box 30 is in contact with the balls 31 during reciprocating movement, the balls 31 will contact with each other due to the linear passage of the transfer box 30, and then the balls 31 are driven to rotate, thus greatly reducing the friction between the transfer box 30 and the balls 31, improving the driving efficiency of the plunger pump 3, increasing the service time of the balls 31 and the parts of the transfer box 30. In this way the spraying machine of the present invention has a longer service life.

The eccentric rotating structure comprises a circular gear disc 33, one side of the gear disc 33 is provided with a driving column 34, the center of the driving column 34 is eccentric to the center of the gear disc 33, the driving column 34 is internally provided with a bearing 35, a mounting column 36 is arranged at the center of the bearing 35, the mounting column 36 passes through the center of the gear disc 33, an end of the driving lever 32 away from the piston rod 29 is provided with a circular through hole 37, a needle bearing 38 is arranged in the through hole 37, and the driving lever 32 is sleeved on the driving column 34 through the needle bearing. The driving column 34 is driven to rotate when the gear disc 33 rotates. The eccentric rotation of the driving column 34 drives the through hole part of the driving lever 32 to rotate eccentrically so that the other end of the driving lever 32 is limited by the transfer box 30 to doing a linear reciprocating movement.

### Embodiment 2

This embodiment differs from Embodiment 1 in that:
One end of the ejector rod extends into the stopper ring 16 and pushes against the liquid inlet ball valve 17, and the end of the ejector rod can further extend into the reducing chamber 15 to push the liquid inlet ball valve 17 open. Since one end of the ejector rod pushes against the liquid inlet ball valve 17, the ejector rod can be operated manually to push the liquid inlet ball valve 17 open when the reducing chamber 15 is blocked by the liquid inlet ball valve 17 on the one hand. On the other hand, when the liquid inlet ball valve 17 moves back and forth in the reducing chamber 15 together with the reciprocating movement of the piston of the plunger pump 3. Each time the liquid inlet ball valve 17 returns to the end of the ejector rod, the liquid inlet ball valve 17 hits the ejector rod, thus causing vibration of the filter screen 12. During the operation of the spraying machine, the continuous vibration of the filter screen 12 can shake off large paint particles that cannot pass the filter screen 12 and adhere to the filter screen 12, thereby preventing a decline in the ability of the plunger pump to pump the paint due to the blockage of the filter screen 12 after long-term operation. And since the filter screen 12 is located at the bottom of the liquid storage container 2, the vibration of the filter screen 12 will also cause the vibration of the paint in the liquid storage container 2, thereby slowing down the condensation time of the paint. The paint particles are always in a small size and will not easily block a spray gun connected with the liquid outlet chamber 6 of the plunger pump 3 during use. In this way, the entire spraying machine is more durable.

## Claims

1. A durable high-pressure airless spraying machine, comprising a housing (1), a liquid storage container (2) and a plunger pump (3), the plunger pump (3) comprising a plunger chamber (4), a liquid inlet chamber (5), a liquid outlet chamber (6) and a pressure relief valve (7), the bottom of the liquid storage container (2) being connected with the liquid inlet chamber (5), the plunger chamber (4) being provided with a pressure protection device, **characterized in that** the plunger pump (3) is arranged on one side of the liquid storage container (2) and lower than a lower end face of the liquid storage container (2); the plunger chamber (4) is internally provided with a piston, a piston rod (29) is fixedly provided at one end of the piston, the piston rod (29) is driven by a driving mechanism to do a reciprocating movement, the driving mechanism comprises a transfer box (30) fixedly connected to one end of the piston rod (29), the transfer box (30) is rotatably connected to a driving lever (32), the other end of the driving lever (32) is rotatably connected to an eccentric rotating structure, and at least one pair of balls (31) are provided on two sides of the transfer box (30) ; the bottom of the liquid storage container (2) is provided with a liquid outlet (9), and the liquid inlet chamber (5) and the liquid outlet (9) are connected by a connecting chamber (20); the liquid outlet (9) is provided with a filter screen (12), a reducing chamber (15) is arranged between the liquid inlet chamber (5) and the plunger chamber (4), the reducing chamber (15) is internally provided with a liquid inlet ball valve (17), and a circular stopper ring (16) with an inner diameter smaller than the diameter of the liquid inlet ball valve (17) is arranged around an end of the reducing chamber (15) facing the liquid inlet chamber (5); the filter screen (12) is provided with an ejector rod, one end of the ejector rod extends into the stopper ring (16) and reaches a front end of the liquid inlet ball valve (17), and the end of the ejector rod can further extend into the reducing chamber (15) to push the liquid inlet ball valve (17) open; the ejector rod comprises a first section (13) perpendicular to the filter screen (12) and a second section (14) parallel to the liquid inlet chamber (5), the first section (13) and the second section (14) are fixedly connected, and an inclined surface (21) is provided at a joint between the first section (13) and the second section (14); the connecting chamber (20) is internally provided with a ramp (22) which is located at the lower end of the inclined surface (21) of the ejector rod, and the gradient of the ramp (22) is the same as that of the inclined surface (21).

2. The durable high-pressure airless spraying machine according to claim 1, **characterized in that** the liquid outlet (9) is provided with a filter screen (12), a reducing chamber (15) with a smaller diameter than the liquid inlet chamber (5) is arranged between the liquid inlet chamber (5) and the plunger chamber (4), the reducing chamber (15) is internally provided with a liquid inlet ball valve (17), and a circular stopper ring (16) with an inner diameter smaller than the diameter of the liquid inlet ball valve (17) is arranged around an end of the reducing chamber (15) facing the liquid inlet chamber (5); the filter screen (12) is provided with an ejector rod, one end of the ejector rod extends into the stopper ring (16) and pushes against the liquid inlet ball valve (17), and the end of the ejector rod can further extend into the reducing chamber (15) to push the liquid inlet ball valve (17) open.

3. The durable high-pressure airless spraying machine according to claim 1 or 2, **characterized in that** the liquid outlet (9) is surrounded by an internally concave step (10), the filter screen (12) is in tight fit with the step (10), and the step (10) is symmetrically provided with two grooves (11) with a depth greater than the depth of the step (10).

4. The durable high-pressure airless spraying machine according to claim 1 or 2, **characterized in that** the plunger chamber (4) is internally provided with a push column (18), one end of the push column (18) slightly extends into the reducing chamber (15), and a first pressure spring (19) is arranged between the push column (18) and the liquid inlet ball valve (17).

5. The durable high-pressure airless spraying machine according to claim 1 or 2, **characterized in that** the first section extends up from the lower end of the filter screen to the upper end of the filter screen.

6. The durable high-pressure airless spraying machine according to claim 5, **characterized in that** the filter screen is slightly arched upward from the sides to the center.

7. The durable high-pressure airless spraying machine according to claim 1, **characterized in that** the pressure protection device comprises a pressure detecting chamber (23) internally connected with the plunger chamber (4), the pressure detecting chamber (23) is internally provided with a pressure detecting rod (24) that moves up and down in the pressure detecting chamber (23) with the pressure change in the plunger chamber (4), a microswitch (25) is arranged outside the pressure detecting chamber (23), and the pressure detecting rod (24) is provided with a toggle rod (26) that drives the microswitch (25) to act.

8. The durable high-pressure airless spraying machine according to claim 1, **characterized in that** an adjusting screw (27) is arranged at an end of the pressure detecting chamber (23) away from the plunger chamber (4), an end of the adjusting screw (27) extends deeply into the pressure detecting chamber (23), and a second pressure spring (28) is arranged between the adjusting screw (27) and the pressure detecting rod (24).

9. The durable high-pressure airless spraying machine according to claim 1, **characterized in that** the eccentric rotating structure comprises a circular gear disc (33), one side of the gear disc (33) is provided with a driving column (34), the center of the driving column (34) is eccentric to the center of the gear disc (33), the driving column (34) is internally provided with a bearing (35), a mounting column (36) is arranged at the center of the bearing (35), the mounting column (36) passes through the center of the gear disc (33), an end of the driving lever (32) away from the piston rod (29) is provided with a circular through hole (37), a needle bearing (38) is arranged in the through hole (37), and the driving lever (32) is sleeved on the driving column (34) through the needle bearing (38).

## Patentansprüche

1. . Langlebige Hochdruck-Airless-Sprühmaschine, umfassend ein Gehäuse (1), einen Flüssigkeitsspeicherbehälter (2) und eine Kolbenpumpe (3), wobei die Kolbenpumpe (3) eine Kolbenkammer (4), eine Flüssigkeitseinlasskammer (5), eine Flüssigkeitsauslasskammer (6) und ein Druckentlastungsventil (7) umfasst, wobei der Boden des Flüssigkeitsspeicherbehälters (2) mit der Flüssigkeitseinlasskammer (5) verbunden ist, wobei die Kolbenkammer (4) mit einer Druckschutzvorrichtung versehen ist, **dadurch gekennzeichnet, dass** die Kolbenpumpe (3) an einer Seite des Flüssigkeitsspeicherbehälters (2) und unterhalb einer unteren Stirnfläche des Flüssigkeitsspeicherbehälters (2) angeordnet ist; die Kolbenkammer (4) innen mit einem Kolben versehen ist, an einem Ende des Kolbens eine Kolbenstange (29) fest angebracht ist, die Kolbenstange (29) durch einen Antriebsmechanismus zu einer Hin- und Herbewegung angetrieben wird, der Antriebsmechanismus ein Getriebegehäuse (30) umfasst, das fest mit einem Ende der Kolbenstange (29) verbunden ist, das Getriebegehäuse (30) drehbar mit einem Antriebshebel (32) verbunden ist, das andere Ende des Antriebshebels (32) drehbar mit einer exzentrischen Rotationsstruktur verbunden ist, und mindestens ein Kugelpaar (31) an zwei Seiten des Getriebegehäuses (30) vorgesehen ist; der Boden des Flüssigkeitsspeicherbehälters (2) mit einem Flüssigkeitsauslass (9) versehen ist, und die Flüssigkeitseinlasskammer (5) und der Flüssigkeitsauslass (9) durch eine Verbindungskammer (20) verbunden sind; der Flüssigkeitsauslass (9) mit einem Filtersieb (12) versehen ist, zwischen der Flüssigkeitseinlasskammer (5) und der Kolbenkammer (4) eine Reduktionskammer (15) angeordnet ist, die Reduktionskammer (15) innen mit einem Flüssigkeitseinlass-Kugelhahn (17) versehen ist, und ein kreisförmiger Stoppring (16) mit einem kleineren Innendurchmesser als der Durchmesser des Flüssigkeitseinlass-Kugelhahns (17) um ein Ende der Reduktionskammer (15) angeordnet ist, das der Flüssigkeitseinlasskammer (5) zugewandt ist; das Filtersieb (12) mit einer Ausstoßstange versehen ist, ein Ende der Ausstoßstange sich in den Stoppring (16) erstreckt und ein vorderes Ende des Flüssigkeitseinlass-Kugelhahns (17) erreicht, und das Ende der Ausstoßstange sich weiter in die Reduktionskammer (15) erstrecken kann, um den Flüssigkeitseinlass-Kugelhahn (17) zu öffnen; die Ausstoßstange einen ersten Abschnitt (13), der senkrecht zu dem Filtersieb (12) verläuft, und einen zweiten Abschnitt (14) umfasst, der parallel zu der Flüssigkeitseinlasskammer (5) verläuft, der erste Abschnitt (13) und der zweite Abschnitt (14) fest miteinander verbunden sind, und an der Verbindung zwischen dem ersten Abschnitt (13) und dem zweiten Abschnitt (14) eine geneigte Fläche (21) vorgesehen ist; die Verbindungskammer (20) innen mit einer Rampe (22) versehen ist, die sich am unteren Ende der geneigten Fläche (21) der Ausstoßstange befindet, und die Steigung der Rampe (22) die gleiche wie die der geneigten Fläche (21) ist.

2. . Langlebige Hochdruck-Airless-Sprühmaschine nach Anspruch 1, **dadurch gekennzeichnet, dass** der Flüssigkeitsauslass (9) mit einem Filtersieb (12) versehen ist, zwischen der Flüssigkeitseinlasskammer (5) und der Kolbenkammer (4) eine Reduktionskammer (15) mit einem kleineren Durchmesser als die Flüssigkeitseinlasskammer (5) angeordnet ist, die Reduktionskammer (15) innen mit einem Flüssigkeitseinlass-Kugelhahn (17) versehen ist und ein kreisförmiger Stoppring (16) mit einem kleineren Innendurchmesser als der Durchmesser des Flüssigkeitseinlass-Kugelhahns (17) um ein Ende der Reduktionskammer (15), das der Flüssigkeitseinlasskammer (5) zugewandt ist, angeordnet ist; das Filtersieb (12) mit einer Ausstoßstange versehen ist, ein Ende der Ausstoßstange sich in den Stoppring (16) erstreckt und gegen den Flüssigkeitseinlass-Kugelhahn (17) drückt, und das Ende der Ausstoßstange sich weiter in die Reduktionskammer (15) erstrecken kann, um den Flüssigkeitseinlass-Kugelhahn (17) zu öffnen.

3. . Langlebige Hochdruck-Airless-Sprühmaschine nach Anspruch 1 oder 2, **dadurch gekennzeichnet, dass** der Flüssigkeitsauslass (9) von einer innen konkaven Stufe (10) umgeben ist, der Filtersieb (12) dicht auf der Stufe (10) anliegt und die Stufe (10) symmetrisch mit zwei Nuten (11) versehen ist, deren Tiefe größer ist als die Tiefe der Stufe (10).

4. . Langlebige Hochdruck-Airless-Sprühmaschine nach Anspruch 1 oder 2, **dadurch gekennzeichnet, dass** die Kolbenkammer (4) innen mit einer Schubsäule (18) versehen ist, ein Ende der Schubsäule (18) sich leicht in die Reduktionskammer (15) erstreckt und zwischen der Schubsäule (18) und dem Flüssigkeitseinlass-Kugelhahn (17) eine erste Druckfeder (19) angeordnet ist.

5. . Langlebige Hochdruck-Airless-Sprühmaschine nach Anspruch 1 oder 2, **dadurch gekennzeichnet, dass** sich der erste Abschnitt von dem unteren Ende des Filtersiebs nach oben bis zu dem oberen Ende des Filtersiebs erstreckt.

6. . Langlebige Hochdruck-Airless-Sprühmaschine nach Anspruch 5, **dadurch gekennzeichnet, dass** das Filtersieb von den Seiten zu der Mitte hin leicht nach oben gewölbt ist.

7. . Langlebige Hochdruck-Airless-Sprühmaschine nach Anspruch 1, **dadurch gekennzeichnet, dass** die Druckschutzvorrichtung eine mit der Kolbenkammer (4) innen verbundene Druckmesskammer (23) umfasst, die Druckmesskammer (23) innen mit einer Druckmessstange (24) versehen ist, die sich mit dem Druckwechsel in der Kolbenkammer (4) in der Druckmesskammer (23) auf und ab bewegt, außerhalb der Druckmesskammer (23) ein Mikroschalter (25) angeordnet ist und die Druckmessstange (24) mit einer Kippstange (26) versehen ist, die den Mikroschalter (25) betätigt.

8. . Langlebige Hochdruck-Airless-Sprühmaschine nach Anspruch 1, **dadurch gekennzeichnet, dass** an einem Ende der Druckmesskammer (23), das von der Kolbenkammer (4) entfernt ist, eine Einstellschraube (27) angeordnet ist, ein Ende der Einstellschraube (27) tief in die Druckmesskammer (23) hineinragt und eine zweite Druckfeder (28) zwischen der Einstellschraube (27) und der Druckmessstange (24) angeordnet ist.

9. . Langlebige Hochdruck-Airless-Sprühmaschine nach Anspruch 1, **dadurch gekennzeichnet, dass** die exzentrische Rotationsstruktur eine kreisförmige Zahnscheibe (33) umfasst, eine Seite der Zahnscheibe (33) mit einer Antriebssäule (34) versehen ist, der Mittelpunkt der Antriebssäule (34) exzentrisch zu dem Mittelpunkt der Zahnscheibe (33) liegt, die Antriebssäule (34) innen mit einem Lager (35) versehen ist, in dem Mittelpunkt des Lagers (35) eine Montagesäule (36) angeordnet ist, die Montagesäule (36) durch den Mittelpunkt der Zahnscheibe (33) verläuft, ein Ende des Antriebshebels (32), das von der Kolbenstange (29) entfernt ist, mit einem kreisförmigen Durchgangsloch (37) versehen ist, in dem ein Nadellager (38) angeordnet ist, und der Antriebshebel (32) durch das Nadellager (38) hindurch auf die Antriebssäule (34) aufgeschoben ist.

## Revendications

1. Machine de pulvérisation sans air à haute pression durable, comportant un boîtier (1), un récipient de stockage de liquide (2) et une pompe à plongeur (3), la pompe à plongeur (3) comportant une chambre de plongeur (4), une chambre d'entrée de liquide (5), une chambre de sortie de liquide (6) et une soupape de surpression (7), le fond du récipient de stockage de liquide (2) étant relié à la chambre d'entrée de liquide (5), la chambre de plongeur (4) étant dotée d'un dispositif de protection contre la pression, **caractérisée en ce que** la pompe à plongeur (3) est agencée sur un côté du récipient de stockage de liquide (2) et plus bas qu'une face d'extrémité inférieure du récipient de stockage de liquide (2) ; la chambre de plongeur (4) est dotée en interne d'un piston, une tige de piston (29) est disposée de manière fixe au niveau d'une extrémité du piston, la tige de piston (29) est entraînée par un mécanisme d'entraînement pour effectuer un mouvement alternatif, le mécanisme d'entraînement comporte une boîte de transfert (30) reliée de manière fixe à une extrémité de la tige de piston (29), la boîte de transfert (30) est reliée en rotation à un levier d'entraînement (32), l'autre extrémité du levier d'entraînement (32) est reliée en rotation à une structure rotative excentrique, et au moins une paire de billes (31) est disposée sur deux côtés de la boîte de transfert (30) ; le fond du récipient de stockage de liquide (2) est doté d'une sortie de liquide (9), et la chambre d'entrée de liquide (5) et la sortie de liquide (9) sont reliées par une chambre de liaison (20) ; la sortie de liquide (9) est dotée d'un tamis (12), une chambre réductrice (15) est agencée entre la chambre d'entrée de liquide (5) et la chambre de plongeur (4), la chambre réductrice (15) est dotée en interne d'une soupape à bille d'entrée de liquide (17), et une bague d'arrêt circulaire (16) d'un diamètre interne inférieur au diamètre de la soupape à bille d'entrée de liquide (17) est agencée autour d'une extrémité de la chambre réductrice (15) orientée vers la chambre d'entrée de liquide (5) ; le tamis (12) est doté d'une tige d'éjecteur, une extrémité de la tige d'éjecteur s'étend dans la bague d'arrêt (16) et atteint une extrémité avant de la soupape à bille d'entrée de liquide (17), et l'extrémité de la tige d'éjecteur peut s'étendre davantage dans la chambre réductrice (15) pour pousser la soupape à bille d'entrée de liquide (17) en position ouverte ; la tige d'éjecteur comporte une première section (13) perpendiculaire au tamis (12) et une deuxième section (14) parallèle à la chambre d'entrée de liquide (5), la première section (13) et la deuxième section (14) sont reliées de manière fixe, et une surface inclinée (21) est disposée au niveau d'un joint entre la première section (13) et la deuxième section (14) ; la chambre de liaison (20) est dotée en interne d'une rampe (22) qui est située au niveau de l'extrémité inférieure de la surface inclinée (21) de la tige d'éjecteur, et le gradient de la rampe (22) est le même que celui de la surface inclinée (21).

2. Machine de pulvérisation sans air à haute pression durable selon la revendication 1, **caractérisée en ce que** la sortie de liquide (9) est dotée d'un tamis (12), une chambre réductrice (15) d'un diamètre inférieur à celui de la chambre d'entrée de liquide (5) est agencée entre la chambre d'entrée de liquide (5) et la chambre de plongeur (4), la chambre réductrice (15) est dotée en interne d'une soupape à bille d'entrée de liquide (17), et une bague d'arrêt circulaire (16) d'un diamètre interne inférieur au diamètre de la soupape à bille d'entrée de liquide (17) est agencée autour d'une extrémité de la chambre réductrice (15) orientée vers la chambre d'entrée de liquide (5) ; le tamis (12) est doté d'une tige d'éjecteur, une extrémité de la tige d'éjecteur s'étend dans la bague d'arrêt (16) et pousse contre la soupape à bille d'entrée de liquide (17), et l'extrémité de la tige d'éjecteur peut s'étendre davantage dans la chambre réductrice (15) pour pousser la soupape à bille d'entrée de liquide (17) en position ouverte.

3. Machine de pulvérisation sans air à haute pression durable selon la revendication 1 ou 2, **caractérisée en ce que** la sortie de liquide (9) est entourée d'une marche (10) concave à l'intérieur, le tamis (12) est bien ajusté avec la marche (10), et la marche (10) est dotée symétriquement de deux rainures (11) d'une profondeur supérieure à la profondeur de la marche (10).

4. Machine de pulvérisation sans air à haute pression durable selon la revendication 1 ou 2, **caractérisée en ce que** la chambre de plongeur (4) est dotée en interne d'une colonne de poussée (18), une extrémité de la colonne de poussée (18) s'étend légèrement dans la chambre réductrice (15), et un premier ressort de pression (19) est agencé entre la colonne de poussée (18) et la soupape à bille d'entrée de liquide (17).

5. Machine de pulvérisation sans air à haute pression durable selon la revendication 1 ou 2, **caractérisée en ce que** la première section s'étend vers le haut de l'extrémité inférieure du tamis à l'extrémité supérieure du tamis.

6. Machine de pulvérisation sans air à haute pression durable selon la revendication 5, **caractérisée en ce que** le tamis est légèrement arqué vers le haut des côtés vers le centre.

7. Machine de pulvérisation sans air à haute pression durable selon la revendication 1, **caractérisée en ce que** le dispositif de protection contre la pression comporte une chambre de détection de pression (23) reliée en interne à la chambre de plongeur (4), la chambre de détection de pression (23) est dotée en interne d'une tige de détection de pression (24) qui se déplace vers le haut et vers le bas dans la chambre de détection de pression (23) avec le changement de pression dans la chambre de plongeur (4), un microrupteur (25) est agencé à l'extérieur de la chambre de détection de pression (23), et la tige de détection de pression (24) est dotée d'une tige à bascule (26) qui entraîne l'action du microrupteur (25).

8. Machine de pulvérisation sans air à haute pression durable selon la revendication 1, **caractérisée en ce qu'**une vis de réglage (27) est agencée au niveau d'une extrémité de la chambre de détection de pression (23) éloignée de la chambre de plongeur (4), une extrémité de la vis de réglage (27) s'étend profondément dans la chambre de détection de pression (23), et un deuxième ressort de pression (28) est agencé entre la vis de réglage (27) et la tige de détection de pression (24).

9. Machine de pulvérisation sans air à haute pression durable selon la revendication 1, **caractérisée en ce que** la structure rotative excentrique comporte un disque d'engrenage circulaire (33), un côté du disque d'engrenage (33) est doté d'une colonne d'entraînement (34), le centre de la colonne d'entraînement (34) est excentrique par rapport au centre du disque d'engrenage (33), la colonne d'entraînement (34) est dotée en interne d'un palier (35), une colonne de montage (36) est agencée au niveau du centre du palier (35), la colonne de montage (36) passe par le centre du disque d'engrenage (33), une extrémité du levier d'entraînement (32) éloignée de la tige de piston (29) est dotée d'un trou traversant circulaire (37), un roulement à aiguilles (38) est agencé dans le trou traversant (37), et le levier d'entraînement (32) est emmanché sur la colonne d'entraînement (34) à travers le roulement à aiguilles (38).
